Europäisches Patentamt

European Patent Office

Office européen des brevets

(11) Numéro de publication: **0 156 709**
**A1**

## (12) DEMANDE DE BREVET EUROPEEN

(21) Numéro de dépôt: **85400425.6**

(22) Date de dépôt: **05.03.85**

(51) Int. Cl.⁴: **H 04 N 7/093**

(30) Priorité: **09.03.84 FR 8403641**

(43) Date de publication de la demande:
**02.10.85 Bulletin 85/40**

(84) Etats contractants désignés:
**BE CH DE FR GB LI**

(71) Demandeur: **SOCIETE INTERNATIONALE DE MICRO-INFORMATIQUE ET DE VIDEO - SIMIV**
**74, rue du Surmelin**
**F-75020 Paris(FR)**

(72) Inventeur: **Peyret, Patrice**
**THOMSON-CSF SCPI 173, bld Haussmann**
**F-75379 Paris Cedex 08(FR)**

(74) Mandataire: **Grynwald, Albert et al,**
**THOMSON-CSF SCPI 173, Bld Haussmann**
**F-75379 Paris Cedex 08(FR)**

(54) Procédé d'insertion de signaux numériques dans un signal de télévision, et décodeur de tels signaux numériques.

(57) Procédé d'insertion de données numériques dans un signal de télévision.

Les données numériques sont introduites à chaque ligne du signal de télévision après le palier arrière (12) de l'intervalle de suppression ligne, au début du signal d'image (13). De préférence on n'insère qu'un seul chiffre binaire par ligne au début du signal d'image (13).

FIG_1

EP 0 156 709 A1

## PROCEDE D'INSERTION DE SIGNAUX NUMERIQUES
## DANS UN SIGNAL DE TELEVISION ET
## DECODEUR DE TELS SIGNAUX NUMERIQUES

L'invention est relative à un procédé d'insertion de données numériques, de préférence binaires, dans un signal vidéocomposite, notamment de télévision. Elle concerne également un décodeur pour extraire les signaux numériques du signal vidéocomposite.

On sait que des expériences sont en cours pour transmettre simultanément des informations télévisées, généralement analogiques, et d'autres informations sous forme numérique, ces dernières ne pouvant être reproduites sur un récepteur de télévision que si cet appareil est équipé d'un décodeur.

Pour la transmission des informations numériques on utilise les lignes, pendant l'intervalle de suppression trame, inutilisées pour transmettre l'information télévisée habituelle.

Etant donné qu'on souhaite transmettre un nombre maximum d'informations en un temps donné, la densité d'informations binaires insérées dans l'image de télévision est importante, de l'ordre de 40 octets par ligne de balayage horizontal.

Les décodeurs et les autres équipements utilisés pour exploiter cette information numérique doivent présenter une bande passante compatible avec cette densité d'informations. Cette bande passante est de 6,2 mégahertz dans le procédé de multiplexage connu sous la dénomination "Didon".

Mais cette bande passante est trop large pour être compatible avec les équipements micro-informatiques, notamment les convertisseurs série-parallèle, utilisés de façon courante. Ainsi un grand nombre de convertisseurs série-parallèle actuellement vendus dans le commerce ont une bande passante de l'ordre de 1 à 2 mégahertz. De plus la bande passante de 6 mégahertz est souvent incompatible avec la bande passante, limitée à 5 mégahertz, de la majorité des magnétoscopes disponibles sur le marché ; en d'autres termes les informations numériques transmises par le réseau public de télévision ne sont pas enregistrables sur la plupart des magnétoscopes. En outre elles ne peuvent pas être traitées par un microordinateur qui reçoit les signaux de télévision par l'intermédiaire d'un convertisseur série-parallèle à bande passante étroite. Enfin les décodeurs sont d'un prix relativement élevé.

On a déjà proposé (brevet britannique 1 486 424) d'insérer les données numériques à chaque ligne du signal vidéocomposite dans le palier arrière de l'intervalle de suppression ligne, de façon plus précise entre le début de l'impulsion de synchronisation ligne et le début de l'information normale de ligne, c'est-à-dire avant le signal d'image proprement dit. On peut ainsi remédier aux inconvénients mentionnés ci-dessus. Cependant l'inventeur a constaté que ce procédé présentait un inconvénient gênant si le signal vidéocomposite est enregistré sur une bande magnétique ou sur un vidéodisque et si on cherche à reproduire cette bande ou ce disque en un grand nombre d'exemplaires à l'aide d'un appareil de reproduction industrielle, les données numériques risquent d'être effacées. En effet ces appareils de reproduction suppriment généralement le palier de suppression ligne - et donc la donnée numérique qu'il contient - et le régénèrent afin d'améliorer la qualité du signal de synchronisation.

L'invention remédie à cet inconvénient. Elle est caractérisée en ce que les données numériques sont insérées à chaque ligne du signal vidéocomposite après le palier arrière de l'intervalle de suppression ligne, au début du signal d'image proprement dit, pendant une durée d'environ 1 microseconde par exemple.

En procédant de cette manière on pourrait penser qu'on altère le bord gauche de l'image. Mais en fait la plupart des récepteurs de télévision sont réglés de façon telle que les premières microsecondes du signal d'image ne sont pas visibles sur l'écran. Par exemple dans le procédé SECAM de télévision en couleurs ou, de façon générale, pour un signal à 625 lignes par trame, le signal d'image a, pour chaque ligne, une durée de 53 microsecondes alors qu'habituellement les récepteurs ne reproduisent que les 48 dernières microsecondes, les cinq premières étant donc invisibles. De préférence on insère un seul chiffre binaire par ligne, ce chiffre occupant toute ladite durée de 1 microseconde. Il est également possible d'enregistrer plusieurs signaux binaires par ligne. Toutefois il est préférable de limiter ce nombre à 5 pour que les signaux binaires soient enregistrables de façon correcte à l'aide d'un magnétoscope ou dans la mémoire d'un micro-ordinateur par l'intermédiaire d'un convertisseur série-parallèle de type courant.

Les niveaux du signal binaire sont, par exemple, les niveaux de noir et de blanc du signal de télévision, le noir représentant par exemple le "0" et le blanc le "1".

Ces signaux numériques sont par exemple transmis par le réseau public de télévision. Ils peuvent être également insérés dans des images de télévision enregistrées sur bande magnétique ou sur vidéodisque. On peut ainsi réaliser un système dit "conversationnel" ou "interactif" mettant en jeu un magnétoscope ou un lecteur de vidéodisques, un microordinateur et un récepteur ou moniteur de télévision qui permet un dialogue entre l'utilisateur et les informations visuelles et sonores enregistrées sur la bande ou sur le disque.

Dans une réalisation les informations numériques ne sont insérées que dans les lignes utiles pour la transmission de l'image. De cette manière on ne perturbe ni la période de suppression trame ni les premières lignes, qui peuvent contenir des signaux d'identification de couleurs ou de l'information dite "télétexte". Autrement dit le procédé d'insertion selon l'invention peut être utilisé en même temps que les procédés connus qui occupent une bande de fréquences plus importante.

Un décodeur capable d'extraire le signal numérique du signal de télévision comprend, dans un exemple, un convertisseur série-parallèle, un comparateur dont la sortie est reliée à l'entrée série du convertisseur et dont la première entrée reçoit le signal de télévision et la seconde entrée un signal de référence de niveau intermédiaire entre les niveaux du blanc et du noir, et un circuit de validation appliquant sur l'entrée de validation du convertisseur un signal seulement pendant ledit intervalle de temps au début du signal d'image.

D'autres caractéristiques et avantages de l'invention apparaîtront avec la description de certains de ses modes de réalisation, celle-ci étant effectuée en se référant aux dessins ci-annexés sur lesquels :

- la figure 1 représente le signal de télévision au début d'une ligne de balayage horizontal avec un chiffre binaire inséré conformément à l'invention,

- la figure 2 est un schéma montrant les parties visibles et invisibles du signal de télévision contenant l'information numérique,

- la figure 3 est un schéma d'un décodeur pour extraire le signal numérique inséré conformément aux figures 1 et 2, et

- la figure 4 est un schéma d'un système conversationnel à magnétoscope utilisant des signaux numériques insérés dans un signal de télévision conformément à l'invention.

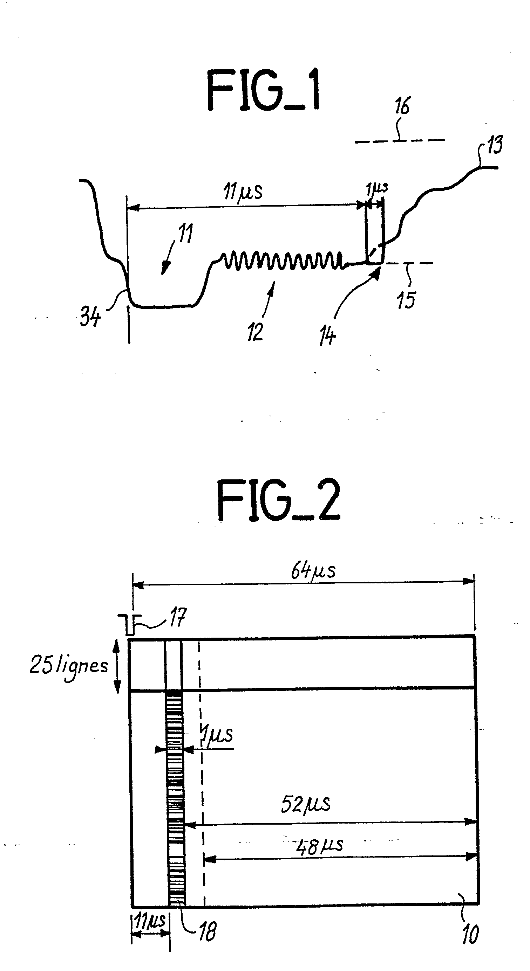

Dans la norme française de télévision à 25 images par seconde et 625 lignes par image, ou trame, chaque ligne a une durée de 64 microsecondes (figure 2). Mais sur ces 64 microsecondes seules 53 microsecondes correspondent au signal d'image et seulement les dernières 48 ou 49 microsecondes de ce signal sont reproduites sur l'écran 10. Les informations analogiques 13 relatives à l'image s'étendent sur une période de 53 microsecondes. Selon l'invention on remplace la période 14 de 1 microseconde au début de l'information analogique 13 (signal d'image proprement dit) par un bit d'information.

La période de début de ligne, invisible sur l'écran, contient l'impulsion de synchronisation ligne 11 (figure 1) et le palier arrière 12 de l'intervalle de suppression ligne dans lequel se trouve, pour le procédé SECAM de télévision en couleurs, la sous-porteuse de chrominance à sa fréquence de repos et, dans les procédés PAL et NTSC, une salve de 10 périodes à la fréquence de la sous-porteuse de chrominance. L'impulsion de synchronisation ligne 11 et le palier 12 s'étendent sur une période de 11 microsecondes (figures 1 et 2).

Dans l'exemple le bit de la période 14 a la valeur 0 s'il est au niveau 15 de suppression, ou niveau du noir, et il a la valeur 1 s'il est au niveau 16 du blanc.

Pour ne pas perturber la période de suppression trame ainsi que les premières lignes qui peuvent contenir des signaux d'identification de couleurs et/ou des informations numériques du type "télétexte" on n'insère pas de chiffre binaire dans les 25 premières lignes suivant l'impulsion 17 (figure 2) de synchronisation trame. Autrement dit on n'insère un chiffre binaire que dans les lignes contenant une information analogique, visible sur l'écran. Etant donné que pour le signal numérique 25 lignes par demi-trame sont inutilisées, c'est-à-dire 50 lignes par image, on transmet ainsi environ 14 350 bits par seconde soit 1 300 octets par seconde, un octet comportant 8 bits d'information, 1 bit de départ, 1 bit de parité et 1 bit d'arrêt.

Sur la figure 2 la bande verticale 18 est une bande composée alternativement de traits blancs et de traits noirs qui symbolisent les informations numériques contenues dans le signal de télévision sous la forme qu'elles présenteraient si elles étaient visibles sur l'écran 10.

Le signal de télévision ainsi codé est soit émis par le réseau public de télévision par voie hertzienne ou par câble, soit enregistré sur une bande magnétique ou sur un vidéodisque.

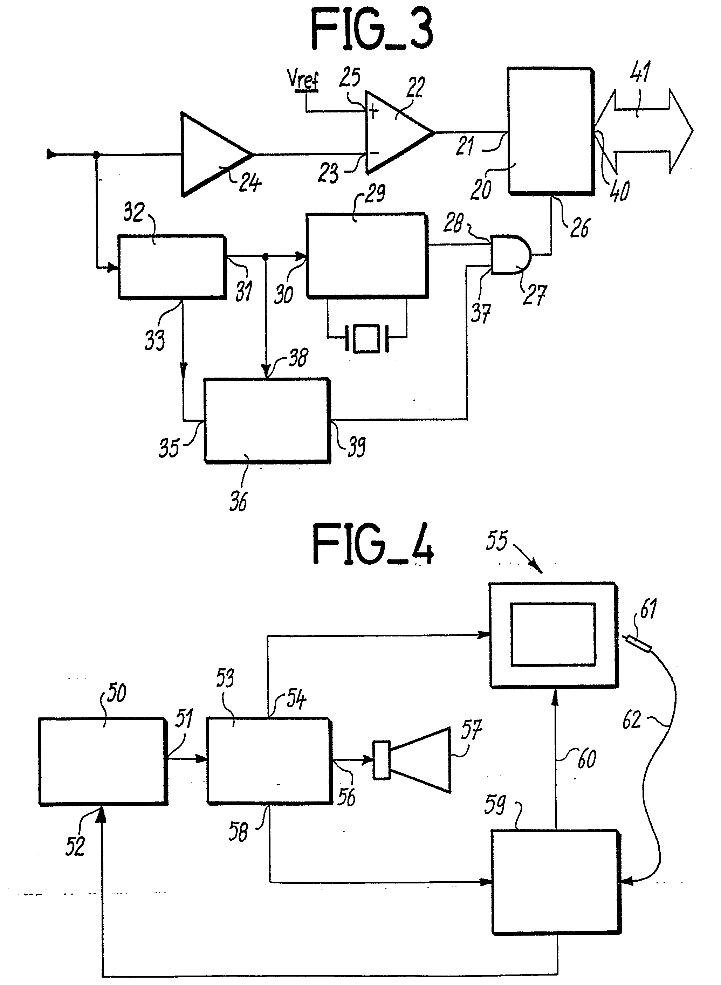

Pour décoder le signal vidéocomposite contenant les informations numériques insérées comme décrit ci-dessus on utilise le décodeur de la figure 3.

Ce dernier comprend un convertisseur 20 série parallèle d'un type courant (ACIA, SIO, etc...) généralement sous forme de circuit intégré et utilisé habituellement dans les matériels d'informatique ou de micro-informatique, notamment pour la commande des imprimantes.

Ce convertisseur 20 présente une entrée 21 recevant des informations en série de la sortie d'un comparateur 22 dont l'entrée négative 23 reçoit le signal vidéocomposite par l'intermédiaire d'un amplificateur vidéo 24. L'entrée positive 25 du comparateur 22 reçoit un potentiel constant $V_{ref}$ dont le niveau est compris entre le niveau du noir et le niveau du blanc.

Le convertisseur 20 présente par ailleurs une entrée 26 recevant des signaux d'horloge et de validation de la sortie d'une porte ET 27 dont la première entrée 28 est reliée à la sortie d'un générateur d'horloge 29 qui délivre des signaux d'horloge pendant une microseconde après la période de 11 microsecondes suivant le début de l'impulsion de synchronisation ligne (figure 1). Ce générateur 29 présente donc une entrée de déclenchement 30 reliée à la sortie 31, délivrant des impulsions de synchronisation ligne, d'un circuit 32 qui extrait les signaux de synchronisation ligne et de synchronisation trame du signal vidéocomposite. Le circuit extracteur 32 comporte donc une seconde sortie 33 délivrant l'impulsion de synchronisation trame.

Le générateur 29 est déclenché par le front de descente 34 (figure 1) de l'impulsion 11.

La sortie 33 du circuit 32 est reliée à une première entrée 35 d'un second générateur 36 destiné à fournir sur la seconde entrée 37 de la porte ET 27 un signal d'autorisation d'ouverture en dehors des 25 premières lignes de chaque demi trame. Autrement dit le signal fourni par le générateur 36 empêche la transmission sur l'entrée 26 du convertisseur 20 des signaux fournis par le générateur 29 pour les 25 premières lignes de chaque demi trame. Ce générateur 36 comporte donc également une entrée 38 connectée à la sortie 31, délivrant les impulsions de synchronisation ligne, du circuit extracteur 32.

Ce générateur 36 comporte par exemple un compteur qui commence à compter les signaux appliqués sur son entrée 38 quand il reçoit un signal sur l'entrée 35. Il comprend également un comparateur dont le signal de référence est égal à 25 pour que le signal sur la sortie 39 change d'état quand le contenu du compteur est égal à 25.

Les sorties parallèles 40 du convertisseur 20 sont reliées à un microordinateur par l'intermédiaire de conducteurs ou bus 41.

Bien que dans le mode de réalisation préféré on n'insère qu'un seul bit d'information numérique au début du signal 13, dans une variante on insère plusieurs bits dans cet intervalle de temps 14. Mais il est préférable de limiter ce nombre à 5 afin, notamment, que ce signal soit enregistrable grâce à un magnétoscope usuel.

Les informations numériques n'étant pas insérées dans l'intervalle de suppression ligne mais, au contraire, au début du signal d'image, il est possible de reproduire à un grand nombre d'exemplaires à l'aide d'un appareil industriel de reproduction, une bande magnétique ou un disque vidéo contenant à la fois des informations numériques et des informations d'image avec éventuellement des informations sonores. En effet, même si cet appareil régénère les paliers de suppression ligne, c'est-à-dire les supprime de la bande ou du disque à reproduire pour engendrer d'autres signaux en principe de meilleure qualité, cette régénération n'entrainera pas de disparition des signaux numériques car, dans l'invention, ceux-ci ne se trouvent pas dans l'intervalle de suppression ligne mais en-dehors de celui-ci.

Les informations numériques insérées dans le signal vidéocomposite sont, dans un exemple, des informations de programme utilisables dans un système comprenant une source d'informations préenregistrées sur un support, notamment un magnétoscope ou un lecteur de vidéodisques, un microordinateur et un récepteur de télévision, le programme permettant à l'opérateur de converser avec le système dans un but d'enseignement ou de jeu.

Pour bien comprendre ce système on explique ici brièvement son fonctionnement pour un cours de conduite automobile : on a tout d'abord enregistré sur une cassette vidéo pour magnétoscope ou sur un vidéodisque, un parcours filmé de véhicule automobile avec un pilote et un moniteur, le film ne montrant que le parcours et non le véhicule. En même temps que ce film sont enregistrées, sous forme sonore ou sous forme numérique, les instructions données par le moniteur au pilote ainsi que les opérations effectuées par ce pilote. Les informations numériques destinées à l'ordinateur sont enregistrées comme décrit ci-dessus c'est-à-dire insérées dans l'intervalle 14 au début de la période du signal d'image analogique 13.

L'élève dispose de commandes qui correspondent à celles se trouvant à l'intérieur d'un véhicule : volant de direction, indicateur de changement de direction, freins. Il doit actionner ces commandes en fonction des ordres donnés par le moniteur et enregistrés de façon sonore sur la bande magnétique vidéo ou sur le vidéodisque. Si les opérations effectuées par l'élève ne sont pas correctes, par exemple s'il n'actionne pas l'indicateur de changement de direction préalablement à un tel changement de direction, le programme (inséré dans le signal vidéocomposite) est tel qu'une indication lui est donnée, de façon sonore ou visuelle, qu'il a commis une erreur.

La figure 4 représente un tel système qui comporte un magnétoscope 50 délivrant sur sa sortie 51 un signal composite du type de celui représenté sur les figures 1 et 2, c'est-à-dire comprenant des informations vidéos, des instructions pour la gestion interactive du système et éventuellement un ou plusieurs signaux sonores. Le magnétoscope 50 est commandé par des instructions appliquées sur son entrée 52. Ces instructions sont par exemple des ordres de démarrage, d'arrêt sur image, de marche avant ou arrière, de ralenti ou d'accéléré, de sauts de séquences, etc. Un séparateur de signaux 53 qui comprend un décodeur du type de celui de la figure 3 sépare les différentes composantes du signal et les dirige vers les éléments du système auxquels elles sont destinées. Les signaux vidéo disponibles sur une sortie 54 du séparateur 53 sont appliqués à un récepteur de télévision 55 ; les signaux sonores délivrés sur la sortie 56 du séparateur 53 sont appliqués à une chaîne son 57 et les signaux numériques délivrés sur la sortie 58 sont appliqués à l'entrée du microordinateur 59.

Une liaison 60 permet au microordinateur 59 d'ajouter, sur l'écran du récepteur 55, une information visuelle à celle de la source 50. Enfin un crayon "électronique" 61 relié à l'ordinateur 59 par un cordon souple 62 peut être mis en contact par l'opérateur avec l'écran du récepteur 55 et constituer un moyen de dialogue supplémentaire.

0156709

## REVENDICATIONS

1. Procédé d'insertion de données numériques, notamment binaires, dans chaque ligne du signal vidéocomposite, ou signal de télévision, caractérisé en ce que ces données numériques sont introduites, à chaque ligne du signal vidéocomposite, au début du signal d'image (13), après le palier arrière (12) de l'intervalle de suppression ligne.

2. Procédé selon la revendication 1, caractérisé en ce qu'on insère un seul chiffre binaire par ligne.

3. Procédé selon la revendication 1, caractérisé en ce qu'on insère, au début du signal d'image (13), au plus 5 chiffres binaires.

4. Procédé selon la revendication 1 ou 2, caractérisé en ce qu'à chaque ligne du signal vidéocomposite les données numériques occupent, au début du signal d'image (13), une période d'environ 1 microseconde.

5. Procédé selon l'une quelconque des revendications 1 à 4, caractérisé en ce que les signaux numériques étant des chiffres binaires, un chiffre, par exemple le 0, correspond au niveau (15) du noir ou de suppression et l'autre chiffre binaire correspond au niveau (16) du blanc.

6. Procédé selon l'une quelconque des revendications précédentes, caractérisé en ce que les signaux numériques sont insérés exclusivement dans les lignes contenant les signaux d'image (13).

7. Procédé selon la revendication 6, caractérisé en ce que chaque trame du signal de télévision contenant 625 lignes, dans chaque demi trame on exclut de l'insertion au moins les 25 premières lignes.

8. Procédé selon la revendication 6 ou 7, caractérisé en ce qu'en plus des données numériques insérées au début du signal d'image, d'autres données numériques sont insérées lors du retour trame.

9. Procédé selon l'une quelconque des revendications précédentes, caractérisé en ce que les données numériques insérées dans le signal vidéocomposite sont des données de programme de gestion pour une liaison conversationnelle ou interactive entre un opérateur et un système comprenant un récepteur de télévision (55) un microordinateur (59) et un lecteur (50) de bandes magnétiques vidéos ou de vidéodisques sur lesquels sont enregistrés des signaux vidéocomposites dans lesquels sont insérées les données de programme.

10. Décodeur de données numériques insérées dans un signal vidéocomposite selon le procédé de l'une quelconque des revendications précédentes, caractérisé en ce qu'il comprend un convertisseur série-parallèle (20), un comparateur (22) dont l'entrée de signal (23) reçoit le signal vidéocomposite et dont la sortie est connectée à l'entrée série (21) du convertisseur (20), et des moyens pour appliquer sur l'entrée (26) de validation du convertisseur un signal de validation seulement pendant ledit intervalle de temps (14) au début du signal d'image (13).

11. Décodeur selon la revendication 10, caractérisé en ce que lesdits moyens appliquant un signal de validation sur l'entrée correspondante (26) du convertisseur (20) comprennent un circuit (32) extracteur des impulsions de synchronisation ligne du signal vidéo composite, le premier front (34) de l'impulsion de synchronisation ligne (11) déclenchant un générateur (29) qui n'émet une impulsion qu'après une durée déterminée (11 microsecondes) après ce premier front et interrompt son émission après cette durée déterminée.

12. Décodeur selon la revendication 11 pour la mise en oeuvre du procédé selon la revendication 6, caractérisé en ce qu'il comprend une porte ET (27) dont la sortie est connectée à l'entrée de validation (26) du convertisseur (20) et dont la première entrée est reliée à la sortie dudit générateur (29), la seconde entrée (37) de cette porte étant connectée à la sortie (39) d'un second générateur (36) commandé par ledit circuit extracteur (32) qui extrait du signal vidéocomposite les impulsions de synchronisation ligne ainsi que les impulsions de synchronisation trame, ce second générateur (36) émettant un signal d'interdiction pendant un nombre déterminé de lignes au début de chaque demi trame.

# FIG_1

# FIG_2

FIG_3

2/2

FIG_4

**0156709**

Numéro de la demande

EP 85 40 0425

Office européen
des brevets

## RAPPORT DE RECHERCHE EUROPEENNE

### DOCUMENTS CONSIDERES COMME PERTINENTS

| Catégorie | Citation du document avec indication, en cas de besoin des parties pertinentes | Revendication concernee | CLASSEMENT DE LA DEMANDE (Int. Cl 4) |
|---|---|---|---|
| X | GB-A-1 486 424 (MULLARD LTD.)<br><br>* Page 1, lignes 74-93; page 2, ligne 114 - page 3, ligne 58; page 2, lignes 93-104; page 4, lignes 1-45 * | 1,2,10,11 | H 04 N 7/093 |
| Y | | 3,9 | |
| A | | 5-7,12 | |
| | --- | | |
| Y | DE-A-2 113 605 (SIEMENS A.G.)<br>* Page 2, ligne 25 - page 3, ligne 37; page 4, ligne 19 - page 7, ligne 3 * | 9 | |
| | --- | | DOMAINES TECHNIQUES RECHERCHES (Int. Cl.4) |
| Y | BIOMEDIZINISCHE TECHNIK, volume 21, juin 1976, pages 33-34, Berun, DE; R. BRENNECKE et al.: "Simultaneous recording of X-ray TV-pictures and digital physiological measurement date in the video band", * The entire document * | 3 | H 04 N |
| | --- | | |
| A | IDEM | 9 | |
| | --- | | |
| Y | DE-A-2 853 764 (DEMOLUX G.M.B.H. & CO. K.G.)<br>* Page 6, lignes 8-21; page 7, ligne 23 - page 9, ligne 11 * | 9 | |
| | --- -/- | | |

Le présent rapport de recherche a été établi pour toutes les revendications

| Lieu de la recherche | Date d achevement de la recherche | Examinateur |
|---|---|---|
| LA HAYE | 19-06-1985 | VERSCHELDEN J. |

Office européen
des brevets

**RAPPORT DE RECHERCHE EUROPEENNE**

## DOCUMENTS CONSIDERES COMME PERTINENTS

Page 2

| Catégorie | Citation du document avec indication. en cas de besoin des parties pertinentes | Revendication concernée | CLASSEMENT DE LA DEMANDE (Int Cl 4) |
|---|---|---|---|
| A | US-A-3 900 887 (HORIMU SOGA) | . | |
| | --- | | |
| A | GB-A-1 370 535 (B.B.C.) | | |
| | --- | | |
| A | GB-A-2 086 692 (SONY CORPORATION) | | |
| | --- | | |
| A | GB-A-2 060 312 (RCA CORPORATION) | | |
| | --- | | |
| A | US-A-4 156 253 (G. STEUDEL) | | |
| | ----- | | |

DOMAINES TECHNIQUES RECHERCHES (Int. Cl.4)

Le present rapport de recherche a ete etal pour toutes les revendications

| Lieu de la recherche | Date d achevement de la recherche | Examinateur |
|---|---|---|
| LA HAYE | 19-06-1985 | VERSCHELDEN J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

            ...............

& : membre de la même famille. document correspondant

OFB Form 1503 03 82